(19) Europäisches Patentamt
European Patent Office
Office européen des brevets

(11) EP 3 653 663 B1

(12) EUROPEAN PATENT SPECIFICATION

(45) Date of publication and mention of the grant of the patent:
**28.12.2022 Bulletin 2022/52**

(21) Application number: **18831141.9**

(22) Date of filing: **02.07.2018**

(51) International Patent Classification (IPC):
***C08J 7/04*** *(2020.01)* ***C08J 5/24*** *(2006.01)*

(52) Cooperative Patent Classification (CPC):
**C08J 5/249; C08J 5/243;** C08J 2363/02

(86) International application number:
**PCT/JP2018/025037**

(87) International publication number:
**WO 2019/013025 (17.01.2019 Gazette 2019/03)**

# (54) MOLDED ARTICLE AND ITS PRODUCTION METHOD

FORMKÖRPER UND DESSEN HERSTELLUNGSVERFAHREN

ARTICLE MOULÉ, ET PROCÉDÉ DE FABRICATION DE CELUI-CI

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **13.07.2017 JP 2017136807**

(43) Date of publication of application:
**20.05.2020 Bulletin 2020/21**

(73) Proprietor: **Toray Industries, Inc.**
**Tokyo 103-8666 (JP)**

(72) Inventors:
- **OKA, Hideki**
**Nagoya-shi**
**Aichi 455-8502 (JP)**
- **SUZUKI, Atsuhisa**
**Nagoya-shi**
**Aichi 455-8502 (JP)**
- **KANEKO, Takayuki**
**Nagoya-shi**
**Aichi 455-8502 (JP)**

(74) Representative: **Mewburn Ellis LLP**
**Aurora Building**
**Counterslip**
**Bristol BS1 6BX (GB)**

(56) References cited:
**WO-A1-2015/107903** **JP-A- 2001 291 757**
**JP-A- 2002 322 588** **JP-A- 2002 327 041**
**JP-A- 2009 197 180** **JP-A- 2012 077 159**
**JP-A- 2013 133 339**

- **DATABASE WPI Week 201373 2013 Thomson Scientific, London, GB; AN 2013-S70719 XP002802080, & JP 2013 221091 A (SHOWA DENKO KK) 28 October 2013 (2013-10-28)**
- **DATABASE WPI Week 201632 2016 Thomson Scientific, London, GB; AN 2016-22186K XP002802081, & JP 2016 053134 A (ASAHI KASEI CORP) 14 April 2016 (2016-04-14)**
- **DATABASE WPI Week 201638 2016 Thomson Scientific, London, GB; AN 2016-30011W XP002802082, & JP 2016 084396 A (TORAY IND INC) 19 May 2016 (2016-05-19)**

Remarks:
The file contains technical information submitted after the application was filed and not included in this specification

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Processed by Luminess, 75001 PARIS (FR)

## Description

Technical Field

The present invention relates of a molded article of a fiber-reinforced composite material and a production method therefor. More particularly, the present invention related to a molded article having a cured covering which has realized excellent surface quality by forming a film on its surface to markedly reduce the surface irregularity of the molded article caused by the morphology of the reinforcement fiber and shrinkage of the resin material, and a production method therefor.

Background Technology

In recent years, members formed from a fiber-reinforced resin (fiber-reinforced plastic, FRP) comprising a matrix resin and a reinforcement fiber, and in particular, CFRP prepared by using carbon fiber are increasingly used for transportation machinery and the like due to their light weight and excellent mechanical properties. Of such applications, in the application where high quality outer appearance is required in addition to the mechanical properties as in the case of exterior members of an automobile, the CFRP is often required to exhibit a smooth surface free from defects.

Typical production methods used for the fiber-reinforced resin molded article include sheet molding compound (SMC) molding and bulk molding compound (BMC) molding. A method recently receiving attention is resin transfer molding (RTM) and its applications are widening. This resin transfer molding (RTM) has enabled use of a reinforcement fiber in the form of filament and molding of articles having extremely high mechanical properties by using a short cycle time, namely, at excellent productivity.

However, the fiber-reinforced resin molded articles obtained by these molding methods suffered from defects from insufficient filling of the surface with the resin and surface irregularities associated with reinforcement fiber morphology and resin shrinkage, resulting in inferior surface smoothness compared to conventional metal members that had been often used. In order to solve the problems as described above, it has often been necessary to mend and polish the surface of the fiber-reinforced resin molded article before the coating, requiring considerable additional labor, while such treatment often failed to realize the sufficient surface smoothness. In particular, fiber-reinforced resin molded articles having large surface area and those having complicated shape including curved surface or perpendicularly bent surface often required long time for the mending and polishing.

In view of the situation as described above, the methods as described below have been proposed. First, in the method according to Patent Document 1, after preparing a fiber-reinforcement resin-impregnated body by the RTM, a composition for covering the fiber-reinforced resin article (a resin different from the matrix resin) is introduced between the surface of the fiber-reinforcement resin-impregnated body and the surface of the mold, and after completing the introduction, clamping is again conducted to cure the composition for covering the fiber-reinforced resin article and produce the fiber-reinforced resin article having fiber pattern and pinholes on the article surface concealed.

The composition for covering the fiber-reinforced resin article is also required to have improved transparency as a film and curability in a short time for improving the productivity, and simultaneously, storage stability. Exemplary such compositions include an epoxy composition for electronic components prepared by combining an epoxy resin, a thiol compound, and a phosphine to improve the curing speed (Patent Document 2); an epoxy resin composition for potting of photosemiconductor elements exhibiting excellent light-transmittance and low stress prepared by combining an alicyclic epoxy resin having a particular structure, a curing agent, a curing accelerator, and thiol (Patent Document 3); an epoxy resin coating composition having good storage stability prepared by combining an epoxy resin, a thiol curing agent, and a curing aid (Patent Document 4); and a resin composition simultaneously having balanced curing properties and storage stability prepared by combining a compound having at least 2 epoxy group and/or thiirane group in the molecule, an ionic liquid, and a polythiol compound having at least 2 thiol groups in the molecule (Patent Document 5) ; Patent Document 6 describes an epoxy resin composition that provides a cured product that is colourless, transparent and is resistant to yellowing due to heat; Patent document 7 describes a two-stage process for manufacturing coated, fiber-reinforced resin molded articles, the coating comprising a bisphenol A epoxy resin.

Prior Art Documents

Patent Documents

Patent Document 1: Japanese Unexamined Patent Publication (Kokai) No. 2013-209510
Patent Document 2: Japanese Unexamined Patent Publication (Kokai) No. 2008-088212

Patent Document 3: Japanese Unexamined Patent Publication (Kokai) No. 2009-13263
Patent Document 4: WO 2010/137636
Patent Document 5: Japanese Unexamined Patent Publication (Kokai) No. 2015-221900
Patent Document 6: JP2013 221091
Patent Document 7: WO 2015/107903

## Summary of the Invention

### Problems to Be Solved by the Invention

When the composition for covering the resin molded article described in Patent Document 1 is used, surface defects such as pin holes caused by the insufficient filling of the matrix resin can be obviated by forming a cured film of such composition on the surface. However, the surface irregularity due to the morphology of the reinforcement fiber substrate and the shrinkage of the entire surface layer resin formed from the matrix resin and the cured film could not be sufficiently improved since the base of problem is the heavy dependence on the resin layer thickness of the entire surface layer resin and thermal shrinkage of the entire surface layer resin by the difference between the temperature in the curing of the resin and the temperature of normal use. The problems as will be described below resulting from such situation had not been obviated.

With regard to the surface irregularity, when explained for the case wherein a woven substrate is used at least in the surface layer of the reinforcement fiber substrate, concave parts are formed at the crossings of the warp and the weft corresponding to the woven structure of the reinforcement fiber bundle, and surface irregularity is thus formed on the surface of the substrate. As a consequence, thickness of the entire surface layer resin of the covered fiber-reinforced resin molded article formed between the smoothened surface of the mold and the woven substrate is not consistent. More specifically, in the case of the surface irregularity of the woven substrate, the entire surface layer is thin in the convex part of the woven substrate while the entire surface layer is thick in the concave part (the fiber-crossing part).

More specifically, even if the surface shape of the smoothly finished mold is transferred in the curing of the covering resin, both the matrix resin and the cured film undergo thermal shrinkage after the removal from the mold and cooling. While the part where the entire surface layer resin is thin undergoes little change in the surface due to the low absolute volume of the thermal shrinkage, in the part where the entire surface layer is thick, the surface experiences considerable change. Accordingly, the surface of the fiber-reinforced resin cooled to the normal temperature exhibited surface irregularity.

In the conventional method, the cured film had been formed at a temperature the same as the temperature used for molding the fiber-reinforced composite material. Accordingly, when the covering composition that had been formed at such temperature is cooled to the temperature of normal use, surface irregularity is caused by the thermal shrinkage of the resin. In view of such situation, formation of the cured film at a temperature lower than the temperature of the fiber-reinforced composite material formation is demanded to thereby reduce the thermal shrinkage. The material described in the Patent Document 1, however, suffered from inability of sufficiently increasing the curing speed at such lower temperature detracting from the productivity of the molded article since coloring of the resin, hence, loss of quality was invited when the curing temperature was increased for the purpose of faster curing.

The epoxy resin composition described in Patent Document 2 is the one prepared for the purpose of using on the surface of an electronic compound, in particular, for the use as a potting agent of a semiconductor, and the epoxy resin composition used for such purpose is required to have a high hardness. When such epoxy resin composition is used for the fiber-reinforced composite material, the surface hardness was likely to be too high for the applications where the fiber-reinforced composite material are generally used, and loss of the quality was also concerned.

The situation was similar for the Patent Document 3 since the epoxy resin composition was also the one for potting the photosemiconductor element, and there was a concern for the loss of quality and the like when converted for use with the fiber-reinforced composite material as in the case of the invention described in the Patent Document 2.

Patent Documents 4 and 5 were silent about formation as the film of the fiber-reinforced composite material.

In view of the situation as described above, an object of the present invention is to provide a molded article which exhibits reduced surface irregularities resulting from the temperature difference between the molding temperature (curing temperature) in the molding of the fiber-reinforced resin and the normal temperature and which also exhibits high surface quality and good weatherability. Another object of the present invention is to provide a method for producing such molded article.

### Means for Solving the Problems

An object of the present invention is to solve the problems as described above, and the molded article of the present invention is a molded article comprising a fiber-reinforced composite material and a film of a resin composition

on a surface of the fiber-reinforced composite material prepared by curing the resin composition, wherein the resin composition comprises components [A] to [C]:

component [A]: an aliphatic epoxy resin,
component [B]: a thiol compound, and
component [C]: a quaternary phosphonium salt,

wherein the component [B] has at least 2 thiol structures represented by chemical formula 2:

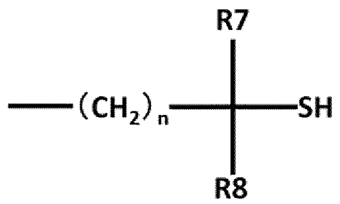

... Chemical formula 2

wherein

R7 represents hydrogen atom or an alkyl group, a cycloalkyl group, an aralkyl group, or an aryl group, containing 1 to 20 carbon atoms,
R8 represents an alkyl group, a cycloalkyl group, an aralkyl group, or an aryl group, containing 1 to 20 carbon atoms, and
n represents a natural number of at least 1.

In this molded article, the film is the one which has been formed separately from the fiber-reinforced composite material and not the film formed from the surface part of the fiber-reinforced composite material.
According to the preferred embodiment of the present invention, the resin composition contains at least 0.1 part by weight and less than 15 parts by weight of the component [C] in relation to 100 parts by weight of the component [A].
According to the preferred embodiment of the molded article of the present invention, the component [A] has an alicyclic structure.
According to the preferred embodiment of the molded article of the present invention, the component [A] has a cyclohexane ring.
According to the preferred embodiment of the molded article of the present invention, the component [A] is a hydrogenated bisphenol epoxy resin.
According to the preferred embodiment of the molded article of the present invention, the component [B] also comprises a secondary thiol structure or tertiary thiol structure.
According to the preferred embodiment of the molded article of the present invention, the component [C] is a compound represented by the chemical formula 1:

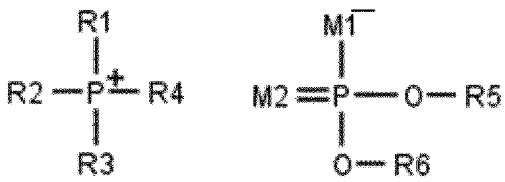

... Chemical formula 1.

R1 to R4 independently represent an alkyl group, a cycloalkyl group, an aralkyl group, or an aryl group, containing 1 to 20 carbon atoms.
R5 and R6 independently represent an alkyl group containing 1 to 20 carbon atoms.
M1 and M2 independently represent an element selected from Group XVI in the periodic table.
According to the preferred embodiment of the molded article of the present invention, the fiber-reinforced composite material contains two or more reinforcement fiber layers; and the reinforcement fiber layer of the reinforcement fiber layers in contact with the film has the morphology of plain weave reinforcement fiber fabric, twill reinforcement fiber fabric, satin reinforcement fiber fabric, and uni-directional reinforcement fiber fabric.
According to the preferred embodiment of the molded article of the present invention, the fiber-reinforced composite material contains carbon fiber as the reinforcement fiber.

The method for producing the molded article of the present invention has the steps of forming the fiber-reinforced composite material at a molding temperature of at least 80°C and up to 300°C, and forming the film by curing the resin composition containing the components [A] to [C] at a temperature of at least of 30°C and less than 80°C on a surface of the fiber-reinforced composite material.

Advantageous Effect of the Invention

The present invention has enabled to provide a molded product wherein the irregularity on the surface generated due to the morphology of the reinforcement fiber in the molding of the fiber-reinforced resin can be drastically reduced as well as a production method therefor. This has enabled improvement in the surface quality of the fiber-reinforced composite material, and accordingly, an increased use of the fiber-reinforced composite material in the automobile application is expected, resulting in the improvement of fuel efficiency by reduced automobile weight and contribution for reduction of the greenhouse gas emission.

Description of Preferred Embodiments

Next, preferable embodiments of the molded article according to the present invention are described in detail.
The molded article of the present invention has a fiber-reinforced composite material and the fiber-reinforced composite material has a film prepared by curing a resin composition containing the following components [A] to [C] on at least one surface of the fiber-reinforced composite material. In the case of the fiber-reinforced composite material in plate form, the composite material may have such film on one surface thereof or on both surfaces. In the case of the fiber-reinforced composite material in the form other than the plate form, the composite material may have such film formed on one particular face thereof or on two or more faces or all faces.

Component [A]: an aliphatic epoxy resin
Component [B]: a thiol compound
Component [C]: a quaternary phosphonium salt.

[Component [A]: aliphatic epoxy resin]

The component [A] used in the present invention is an aliphatic epoxy resin. An aliphatic epoxy resin designates an aliphatic glycidyl ether obtained from an alcohol having a plurality of hydroxy groups.
Examples of the aliphatic glycidyl ether which is preferable for use as the component [A] (aliphatic epoxy resin) in the present invention include diglycidyl ether of ethylene glycol, diglycidyl ether of propylene glycol, diglycidyl ether of 1,4-butanediol, diglycidyl ether of 1,6-hexanediol, diglycidyl ether of neopentyl glycol, diglycidyl ether of cyclohexane dimethanol, diglycidyl ether of glycerin, triglycidyl ether of glycerin, diglycidyl ether of trimethylol ethane, triglycidyl ether of trimethylol ethane, diglycidyl ether of trimethylolpropane, triglycidyl ether of trimethylolpropane, tetraglycidyl ether of pentaerythritol, diglycidyl ether of dodecahydrobisphenol A, and diglycidyl ether of dodecahydrobisphenol F.
By using an aliphatic epoxy resin for the component [A], coloring of the cured product by the UV absorption that is caused in the case of the aromatic epoxy resin can be suppressed, and viscosity of the composition itself can be maintained at a low level, and introduction of the composition into the mold cavity is expected to be facilitated. In view of the structure, when the component [A] has an alicyclic structure, the film of the present invention has higher strength and the molded article will enjoy a higher quality. In view of this point, the component [A] preferably has a cyclohexane ring, and more preferable examples of the component [A] include hydrogenated bisphenol epoxy resin, for example, diglycidyl ether of dodecahydrobisphenol A and diglycidyl ether of dodecahydrobisphenol F.

[Other epoxy resins]

The resin composition used in the present invention may also contain other epoxy resins in addition to the component [A] to the extent not adversely affecting the properties of the present application. Preferable examples of such epoxy resin other than the component [A] include an aromatic glycidyl ether obtained from a phenol having two or more hydroxy groups, an epoxy resin having a glycidylamine obtained from an amine, and glycidyl ester obtained from a carboxylic acid having two or more carboxyl groups.
Examples of the aromatic glycidyl ether include diglycidyl ether obtained from a bisphenol such as diglycidyl ether of bisphenol A, diglycidyl ether of bisphenol F, diglycidyl ether of bisphenol AD, and diglycidyl ether of bisphenol S, polyglycidyl ether of novolac obtained from a phenol or alkylphenol, and diglycidyl ether of resorcinol, diglycidyl ether of hydroquinone, diglycidyl ether of 4,4'-dihydroxybiphenyl, diglycidyl ether of 4,4'-dihydroxy-3,3',5,5'-tetramethyl biphenyl, diglycidyl ether of 1,6-dihydroxynaphthalene, diglycidyl ether of 9,9'-bis(4-hydroxyphenyl)fluorene, triglycidyl ether

of tris(p-hydroxyphenyl)methane, tetraglycidyl ether of tetrakis(p-hydroxyphenyl)ethane, and diglycidyl ether having oxazolidone skeleton obtained by reacting diglycidyl ether of bisphenol A and difunctional isocyanate.

Examples of the glycidylamine include diglycidyl aniline, diglycidyl toluidine, triglycidyl aminophenol, tetraglycidyl diaminodiphenylmethane, tetraglycidyl xylylenediamine, halogen or alkyl-substitutes thereof, and hydrogenated products thereof.

Examples of the glycidyl ester include diglycidyl phthalate ester, diglycidyl terephthalate ester, diglycidyl hexahydrophthalate ester, and diglycidyl dimer acid ester.

[Component [B]: thiol compound]

The component [B] used in the present invention is a thiol compound, and more specifically, a compound having 2 or more thiol groups capable of reacting with the epoxy group in the component [A] (aliphatic epoxy resin) in one molecule, and which functions as a curing agent for the epoxy resin.

Use of the thiol compound for the component [B] is expected to realize curing at a sufficiently high speed as well as improvement of the productivity when the cured film is formed at a temperature lower than the temperature used for forming the fiber-reinforced composite material.

Preferable examples of additional thiol compounds not of Chemical formula 2 include pentaerythritol tetrakis(3-mercaptopropionate), trimethylolpropane tris(3-mercaptopropionate), dipentaerythritol hexakis(3-mercaptopropionate), tris-[(3-mercaptopropionyloxy)-ethyl]-isocyanurate, tetraethylene glycol bis(3-mercaptopropionate), 1,2-bis(2-mercaptoethylthio)-3-mercaptopropane, , and bisphenol A thiol. The preferred thiol compounds of Chemical formula 2 are 1,4-bis(3-mercaptobutyryloxy)butane, pentaerythritol tetrakis(3-mercaptobutylate), and 1,3,5-tris(3-mercaptobutyloxyethyl)-1,3,5-triazine-2,4,6(1H ,3H,5H)-trione.

In the meanwhile, a viscosity low enough to allow flowing of the resin composition into the cavity of the mold should be stably maintained during the introduction of the resin composition in the mold cavity, and in view of this, the component [B] preferably has a secondary thiol structure or tertiary thiol structure, and more specifically, at least 2 thiol structures represented by the following chemical formula 2:

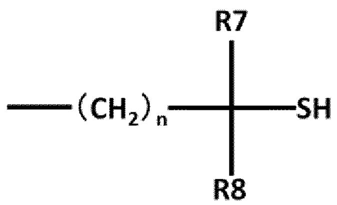

... Chemical formula 2.

R7 represents hydrogen atom or an alkyl group, a cycloalkyl group, an aralkyl group, or an aryl group, containing 1 to 20 carbon atoms.

R8 represents an alkyl group, a cycloalkyl group, an aralkyl group, or an aryl group, containing 1 to 20 carbon atoms.

n represents a natural number of at least 1.

When R7 and R8 are both hydrogen atom, the resin composition for the film may suffer from low stability and viscosity increase in short time as well as difficulty of molding.

Preferably, n represents a natural number of at least 1 and up to 10, and more preferably, a natural number of at least 1 and up to 5.

Examples of the preferable thiol compound having such structure include 1,4-bis(3-mercaptobutyryloxy)butane, pentaerythritol tetrakis(3-mercaptobutylate), and 1,3,5-tris(3-mercaptobutyloxyethyl)-1,3,5-triazine-2,4,6(1H ,3H,5H)-trione.

In the preferred embodiment of the present invention, amount of the component [A] and the component [B] blended is such that ratio of the number of thiol groups (H) in the component [B] to the total number of epoxy groups (E) in the component [A] (H/E ratio) is in the range of 0.8 to 1.3. When the H/E ratio is less than 0.8, polymerization between the excessive epoxy resin takes place, inviting loss of physical properties of the cured product. When the H/E ratio is in excess of 1.3, concentration of the reaction point of the system is reduced by the excessive curing agent component, and this invites decrease of the reaction speed, and hence, there is a risk that the sufficient high speed curability may not be realized.

[Component [C]: quaternary phosphonium salt]

The component [C] used in the present invention is a quaternary phosphonium salt, and use of such quaternary

phosphonium salt is preferable since it functions as a curing accelerator for realizing fast curing.

When the quaternary phosphonium salt is used in the present invention, although the precise mechanism is unknown, the main solution and the curing agent solution after their mixing will be stable with suppressed increase in the viscosity after the mixing, and stability in the introduction of the solution mixture in the cavity of the mold will be sufficient with low viscosity, and also, the curing reaction will proceed in sufficiently high speed with reduced curing time.

Examples of the quaternary phosphonium salt which are preferable for use as the component [C] in the present invention include tetraethylphosphonium bromide, tributylmethylphosphonium iodide, tetraethylphosphonium hexafluorophosphate, tetraethylphosphonium tetrafluoroborate, tributyl(cyanomethyl)phosphonium chloride, tetrakis(hydroxymethyl)phosphonium chloride, tetrabutylphosphonium hydroxide, tetrabutylphosphonium bromide, tetrabutylphosphonium chloride, tetrakis(hydroxymethyl)phosphonium sulfate, tributyl-n-octylphosphonium bromide, tetra-n-octylphosphonium bromide, tetrabutylphosphonium tetrafluoroborate, tetrabutylphosphonium hexafluorophosphate, tributyldodecylphosphonium bromide, tributylhexadecylphosphonium bromide, trihexyl(tetradecyl)phosphonium dicyanamide, methyltriphenylphosphonium iodide, methyltriphenylphosphonium bromide, methyltriphenylphosphonium chloride, tributylmethylphosphonium bis(trifluoromethanesulfonyl)imide, tetraphenylphosphonium bromide, tetraphenylphosphonium chloride, tetraphenylphosphonium iodide, (bromomethyl)triphenylphosphonium bromide, (chloromethyl)triphenylphosphonium chloride, (cyanomethyl)triphenylphosphonium chloride, ethyltriphenylphosphonium bromide, ethyltriphenylphosphonium iodide, isopropyltriphenylphosphonium iodide, triphenylvinylphosphonium bromide, allyltriphenylphosphonium bromide, allyltriphenylphosphonium chloride, butyltriphenylphosphonium bromide, (formylmethyl)triphenyl chloride, (methoxymethyl)triphenylphosphonium chloride, triphenylpropylphosphonium bromide, triphenylpropargylphosphonium bromide, amyltriphenylphosphonium bromide, acetonyltriphenylphosphonium chloride, benzyltriphenylphosphonium chloride, 3-bromopropyltriphenylphosphonium bromide, benzyltriphenylphosphonium bromide, cyclopropyltriphenylphosphonium bromide, 2-dimethylaminoethyltriphenylphosphonium bromide, hexyltriphenylphosphonium bromide, heptyltriphenylphosphonium bromide, tetraphenylphosphonium tetraphenylborate, (3-trimethylsilyl-2-propyl)triphenylphosphonium bromide, triphenyl(tetradecyl)phosphonium bromide, (2-trimethylsilylethyl)triphenylphosphonium iodide, tetrabutylphosphonium tetraphenylborate, tributyl(1,3-dioxan-2-ylmethyl)phosphonium bromide, trans-2-butane-1,4-bis(triphenylphosphonium chloride), (tert-butoxycarbonyl methyl)triphenylphosphonium bromide, (4-bromobenzyl)triphenylphosphonium bromide, cinnamyltriphenylphosphonium bromide, (4-chlorobenzyl)triphenylphosphonium chloride, (3-carboxypropyl)triphenylphosphonium bromide, (2-chlorobenzyl)triphenylphosphonium chloride, ethoxycarbonyl methyl(triphenyl)phosphonium bromide, methoxycarbonyl methyl(triphenyl)phosphonium bromide, (1-naphthylmethyl)triphenylphosphonium chloride, phenacyltriphenylphosphonium bromide, 2- (trimethylsilyl) ethoxy methyltriphenylphosphonium chloride, tetraphenylphosphonium tetra-p-tolyl borate, 4-(carboxybutyl)triphenylphosphonium bromide, (1,3-dioxan-2-yl)methyltriphenylphosphonium bromide, (2,4-dichlorobenzyl)triphenylphosphonium chloride, (3,4-dimethoxybenzyl)triphenylphosphonium bromide, 4-ethoxybenzyltriphenylphosphonium bromide, (2-hydroxybenzyl)triphenylphosphonium bromide, (3-methoxybenzyl)triphenylphosphonium chloride, (4-nitrobenzyl)triphenylphosphonium bromide, 2-(1,3-dioxan-2-yl)ethyltriphenylphosphonium bromide, 2-(1,3-dioxan-2-yl)ethyltriphenylphosphonium bromide, triphenyl(2-thienylmethyl)phosphonium bromide, dodecyltributylphosphonium chloride, ethyltrioctylphosphonium bromide, hexadecyltributylphosphonium chloride, methyltributylphosphonium dimethylphosphate, methyltributylphosphonium iodide, tetraethylphosphonium bromide, tetraethylphosphonium hydroxide, tetrabutylphosphonium bromide, tetrabutylphosphonium chloride, tetrabutylphosphonium o,o-diethylphosphorodithioate, tetrabutylphosphonium benzotriazolate, tetrabutylphosphonium tetraphenyl borate, triethylpentylphosphonium bromide, triethyloctylphosphonium bromide, triethylpentylphosphonium bis(trifluoromethylsulfonyl)imide, triethyloctylphosphonium bis(trifluoromethylsulfonyl)imide, and tri-n-butylmethylphosphonium bis(trifluoromethylsulfonyl)imide.

The preferred quaternary phosphonium salt used for the component [C] in the present invention is the compound represented by the chemical formula 1 in view of the solubility in the component [A] and the component [B], the cost, and simultaneous realization of the stably low viscosity and the high speed curability, and preferable examples include methyltributylphosphonium dimethylphosphate and tetrabutylphosphonium o,o-diethylphosphorodithioate.

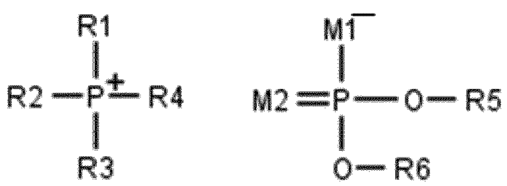

... Chemical formula 1.

R1 to R4 independently represent an alkyl group, a cycloalkyl group, an aralkyl group, or an aryl group, containing 1 to 20 carbon atoms.

R5 and R6 independently represent an alkyl group containing 1 to 20 carbon atoms.

M1 and M2 independently represent an element selected from Group XVI in the periodic table, and in particular, oxygen and sulfur.

Content of the component [C] used in the present invention is preferably at least 0.1 part by weight and less than 15 parts by weight, more preferably at least 0.1 part by weight and up to 12 parts by weight, and still more preferably at least 0.1 part by weight and up to 10 parts by weight in relation to 100 parts by weight of the component [A]. When the content of the component [C] is less than 0.1 parts by weight, there is a risk that a prolonged time is required for the curing and the ability of the high speed curing is not sufficiently realized. In the meanwhile, when the content of the component [C] is at least 15 parts by weight, the low viscosity will be maintained only for a short time and there is a risk that introduction of the resin composition to the mold cavity may become difficult.

[Cure index of the resin composition for the film]

The resin composition of the present invention preferably has a particular temperature T wherein the time t90 (the time required for the cure index determined by the measurement of dielectric properties at a constant temperature to reach 90%) satisfies the following relation (relation 1):

$$t90 \leq 30 \quad \ldots \text{ (relation 1)}$$

(t90 represents the time (minute) between the start of the measurement at temperature T to the time when the cure index reached 90%).

Measurement of dielectric properties is advantageous in determining curing profile of the thermosetting resin that undergoes change from low viscosity liquid to high modulus amorphous solid although there is no unique correspondence with the viscosity and the modulus. In the measurement of the dielectric properties, the curing profile is determined from change of ion viscosity (equivalent resistivity) with lapse of time calculated from the complex dielectric constant measured by applying a high frequency electric field to the thermosetting resin.

The apparatus used for the measurement of the dielectric properties is, for example, MDE-10 cure monitor manufactured by Holometrix-Micromet. The measurement is conducted by placing an O ring manufactured by Viton having an inner diameter of 32 mm and a thickness of 3 mm on the lower side of the programmable Minipress MP2000 having a TMS-1 inch model sensor embedded in the lower side, setting the press at the given temperature T, pouring the epoxy resin composition inside the O ring, closing the press, and monitoring ion viscosity of the epoxy resin composition with lapse of time. The measurement of dielectric properties was conducted at the frequency of 1, 10, 100, 1000, and 10000 Hz, and logarithm Log($\sigma$) of the frequency-independent ion viscosity was determined by using the software (Eumetric) accompanying the apparatus.

The cure index at the time t required for the curing is determined by the following relation (relation 2), and the time required for reaching the cure index of 90% was designated t90.

$$\text{Cure index} = \{\log(\alpha t)-\log(\alpha min)\} / \{\log(\alpha max)-\log(\alpha min)\} \times 100 \quad \ldots \text{ (relation 2)}$$

- Cure index: (unit: %)
- $\alpha$t: ion viscosity (unit: $\Omega$cm) at time t
- $\alpha$min: minimum value of the ion viscosity (unit: $\Omega$cm)
- $\alpha$max: maximum value of the ion viscosity (unit: $\Omega$cm)

Tracing of the ion viscosity by measuring the dielectric properties is relatively easy even at a high curing reaction speed. In addition, the ion viscosity can be measured after the gelation, and the ion viscosity has the nature of increasing with the progress of the curing and saturating with the completion of the curing, thereby enabling the tracing of the curing reaction. The value standardized as described above so that minimum value of the logarithm of the ion viscosity is 0% and the saturated (maximum) value is 100% is the cure index, and this cure index is used to describe the curing profile of the thermosetting resin. The condition suitable for reducing the initial viscosity increase and realizing short curing time can be described by using the time required for the cure index to reach 10% for the index of the speed of the initial increase of the viscosity, and the time required for the cure index to reach 90% for the index of the curing time.

In consideration of the balance with the molding temperature of the fiber-reinforced composite material, the curing temperature of the resin composition for the film, namely, the "particular temperature T" is preferably at least 30°C and less than 80°C since such temperature range enables decrease in the thermal shrinkage after removal from the

mold and production of the fiber-reinforced composite material having good surface quality.

[Blending of the resin composition for the film]

The resin composition for the film of the present invention is obtained by preliminarily preparing each of the main solution containing the component [A] and the curing agent solution containing the component [B] for the main component (it is to be noted the "main component" as used herein is the component included in the largest amount in terms of weight in the curing agent solution) in the amounts to be blended as described above, and mixing the main solution and the curing agent solution of the amounts as described above immediately before the use. The component [C] may be blended with either the main solution or the curing agent solution, and in the preferred embodiment, the component [C] is blended in the curing agent solution.

Other components to be blended can be blended in any of the main solution or the curing agent solution, and they can be used by preliminarily blending in either solution or in both solutions. The main solution and the curing agent solution are preferably heated separately before their mixing, and in view of the usable period of the resin, they are preferably mixed immediately before its use, for example, immediately before the introduction of the resin composition in the mold by using a blender to obtain the two part epoxy resin composition.

[Fiber-reinforced composite material]

In the fiber-reinforced composite material of the present invention, the type of the matrix resin used in the formation of the composite material with the reinforcement fiber may be either a thermoplastic resin or a thermosetting resin. Use of a thermosetting resin such as an unsaturated polyester resin, an epoxy resin, a phenol resin, or a polyurethane resin for the matrix resin is preferable since the resulting fiber-reinforced resin molded article will enjoy excellent mechanical properties. In view of heat resistance, the matrix resin preferably has a glass transition temperature of at least 100°C.

For the fiber-reinforced composite material used in the present invention exemplary applicable molding methods include (i) SMC molding wherein a sheet-form intermediate substrate formed from bundles of reinforcement fiber cut to an adequate length preliminarily impregnated with a thermosetting resin is molded to a predetermined shape by applying heat and pressure in a mold; (ii) BMC molding wherein the bundles of reinforcement fiber cut to an adequate length, a thermosetting resin, and a filler are mixed, and this intermediate material in bulk form is molded to a predetermined shape by applying heat and pressure in a mold; (iii) prepreg molding wherein prepregs (intermediate substrates) are prepared by aligning reinforcement fiber bundles in parallel or weaving the reinforcement fiber bundles in sheet form and impregnating the sheet with a matrix resin and the thus prepared prepregs are laminated in a mold and heat and pressure are applied by the press, laminated in a mold and heat is applied by vacuum bag, or placed in an autoclave and heat and pressure are applied; and (iv) liquid compression molding wherein a liquid matrix resin is supplied onto a reinforcement fiber substrate of woven fabric, NCF, or the like placed on one half of mold (the two face mold) and heat and pressure are applied after closing the mold; and of these, use of the RTM simultaneously realizes short cycle time and high mechanical properties. The temperature used for the molding of the fiber-reinforced composite material is preferably at least 80°C and up to 300°C and more preferably at least 90°C and up to 200°C. When the molding temperature of the molding of the fiber-reinforced composite material is less than 80°C, the temperature range may overlap with the curing temperature of the resin composition for the film, and there is a risk that the effect of reducing thermal shrinkage after the film curing that should improve the surface quality may not be realized. When the molding temperature of the fiber-reinforced composite material is in excess of 300°C, the matrix resin of the fiber-reinforced composite material may become decomposed and the surface may become rough, and the effect of improving the surface quality by the resin composition for the film may not be sufficiently realized.

In the fiber-reinforced composite material used in the present invention, preferable examples of the reinforcement fibers used include glass fiber, aramid fiber, carbon fiber, and boron fiber, and in view of producing a fiber-reinforced composite material having excellent mechanical properties such as strength and modulus despite the light weight, the preferred is use of carbon fiber. The reinforcement fiber may be either staple or filament, and both may be used at once. In view of producing a fiber-reinforced composite material having a high Vf, the reinforcement fiber used is preferably a filament.

When the molded article according to the present invention is used without any colored coating, namely, when the product is used in the condition wherein the reinforcement fiber substrate itself can be visually recognized from the exterior, the molded article has particularly high product value . In such case, woven textiles such as plain weave, twill, and satin are selectively used since pattern inherent to each woven structure has uniquely excellent design value.

Examples

Next, the epoxy resin composition for the film and the fiber-reinforced composite material of the present invention are described in further reference by referring to the Examples.

<Resin starting materials>

The resin starting materials as described below were used to prepare the resin composition for the film used in each Example. Unless otherwise noted, unit for the content of the epoxy resin composition in Table 1 is "parts by weight".

1. Epoxy resin

- "RIKARESIN" (registered trademark) HBE-100 (manufactured by New Japan Chemical Co., Ltd.): hydrogenated bisphenol A epoxy resin having an epoxy equivalent weight of 215
- "RIKARESIN" (registered trademark) DME-100 (manufactured by New Japan Chemical Co., ltd.): diglycidyl ether of 1,4-cyclohexane dimethanol having an epoxy equivalent weight of 158
- "EPOTOTE" (registered trademark) YD-128 (manufactured by Nippon Steel & Sumikin Chemical Co., Ltd.) : bisphenol A epoxy resin having an epoxy equivalent weight of 189

2. thiol compound

- PEMP (manufactured by SC Organic Chemical Co., Ltd.): pentaerythritol tetrakis(3-mercaptopropionate)
- "Karenz MT" (registered trademark) NR1 (manufactured by Showa Denko K.K.): 1,3,5-tris(3-mercaptobutyryloxyethyl)-1,3,5-triazine-2,4,6( 1H,3H,5H)-trione
- "Karenz MT" (registered trademark) PE1 (manufactured by Showa Denko K.K.): pentaerythritol tetrakis(3-mercaptobutylate)

3. Quaternary phosphonium salt

- ethyltriphenylphosphonium bromide (manufactured by Tokyo Chemical Industry Co., Ltd.)
- "HISHICOLIN" (registered trademark) PX-4ET (manufactured by NIPPON CHEMICAL INDUSTRIAL CO., LTD.): tetrabutylphosphonium o,o-diethylphosphorodithioate

4. Other substances

- m-xylylenediamine (manufactured by Tokyo Chemical Industry Co., Ltd.)
- HN-5500 (manufactured by Hitachi Chemical Company): methylhexahydrophthalic acid anhydride
- tri-p-tolylphosphine (manufactured by Tokyo Chemical Industry Co., Ltd.)

<Preparation of resin composition for the film>

The epoxy resin was blended by the blend ratio shown in Table 1 to prepare the main solution. The component [B] (thiol compound), the component [C] (quaternary phosphonium salt), and other substances were blended by the blend ratio shown in Table 1 to prepare the curing agent solution. The main solution and the curing agent solution were used, and these solutions were blended by the blend ratio shown in Table 1 to prepare the epoxy resin composition.

<Viscosity measurement of the resin composition for the film>

Viscosity of the resin composition for the film at 1 minute after the preparation by mixing was measured according to the measurement method using a cone-and-plate rotational viscometer of ISO 2884-1 (1999) for use as an index for the stability of the viscosity. The apparatus used was model TVE-33H manufactured by Toki Sangyo Co., Ltd. The rotor was used at 1°34' × R24, the measurement temperature was 50°C, and amount of the sample was 1 $cm^3$.

<Measurement of dielectric properties>

To monitor the curing of the epoxy resin, measurement of the dielectric properties was conducted. The apparatus used for the measurement of the dielectric properties was MDE-10 cure monitor manufactured by Holometrix-Micromet. An O ring manufactured by Viton having an inner diameter of 32 mm and a thickness of 3 mm was placed on the lower

side of the programmable Minipress MP2000 having a TMS-1 inch model sensor embedded in the lower side, and after setting the press at a temperature of 50°C and pouring the epoxy resin composition inside the O ring, the press was closed and ion viscosity of the epoxy resin composition with lapse of time was monitored. The measurement of dielectric properties was conducted at the frequency of 1, 10, 100, 1000, and 10000 Hz, and logarithm Log($\alpha$) of the frequency-independent ion viscosity was determined by using the accompanying software.

Next, cure index was determined by the following relation (relation 2), and t90 which is the time required for reaching the cure index of 90% was determined.

$$\text{Cure index} = \{\log(\alpha t)-\log(\alpha min)\} / \{\log(\alpha max)-\log(\alpha min)\} \times 100 \quad \text{... (relation 2)}$$

- Cure index: (unit: %)
- $\alpha t$: ion viscosity (unit: $\Omega$cm) at time t
- $\alpha min$: minimum value of the ion viscosity (unit: $\Omega$cm)
- $\alpha max$: maximum value of the ion viscosity (unit: $\Omega$cm)

<Preparation of the plate by curing the resin for the film>

After placing a copper spacer having a thickness of 2 mm having a square (50 mm x 50 mm) cut out on the lower side of the press, the press was set at temperature of 50°C, and the epoxy resin composition was poured into the interior of the spacer. The press was closed, and after 30 minutes, the press was opened to obtain the cured resin plate. The cured plate was then subjected to a heat treatment at 105°C for 3 hours.

<Coloring of the cured product>

The cured resin plate was evaluated for the coloring. More specifically, test pieces (30 mm x 30 mm) having a thickness of 2 mm cut out from the cured resin plate were used, and color tone of the cured product was indicated by L*a*b* color system by using a spectrocolorimeter (CM-700d manufactured by KONICA MINOLTA, INC.). L*a*b* color system is the system used for representing the color of a substance, and L* indicates lightness, and a* and b* indicate chromaticity, wherein a* is the red direction, -a* is the green direction, b* is the yellow direction, and -b* is the blue direction. The measurement was conducted by measuring the spectral transmittance under the condition not including the specular reflection at a wavelength range of 380 to 780 nm by using D65 for the light source and 10° for the field. The result was evaluated "not colored" when $|a^*| \leq 2$ and $|b^*| \leq 5$, and "colored" for other cases.

<Preparation of the fiber-reinforced composite material>

The fiber-reinforced composite material used was the one prepared by the RTM as described below.

6 sheets of carbon fiber fabric CO6343B (carbon fiber T300-3K having a tissue of plain weave and a unit weight of 198 g/m$^2$ manufactured by Toray Industries, Inc.) as the reinforcement fiber were laminated in the cavity of a mold having a plate-shaped cavity of 350 mm x 700 mm x 1.6 mm, and the laminate was clamped by using a press. Next, interior of the mold maintained at a temperature of 120°C (molding temperature) was evacuated with a vacuum pump to the pressure in the range of atmospheric pressure to 0.1 MPa, and an epoxy resin composition (TR-C38 manufactured by Toray Industries, Inc.) was preliminarily introduced by a resin introducer. 10 minutes after the start of introducing the epoxy resin composition, the mold was opened, and the molded article was removed from the mold to obtain the fiber-reinforced composite material.

<Preparation of the cured film>

The mold for the film was adjusted to a temperature of 50°C, and after placing the fiber-reinforced composite material that had been cut into the size of 120 mm x 60 mm on the lower mold, the upper mold was closed, and the interior of the mold was evacuated. The resin composition for the film was then prepared by mixing the ingredients at the blend ratio shown in Table 1 by the procedure as described above, and the resin was introduced in the mold. After 30 minutes, the upper mold was opened and the fiber-reinforced resin molded article having the film on its surface was removed from the mold.

<Surface smoothness>

The surface smoothness was evaluated by confirming wave scan (WS) value of the molded article surface. In the automobile application, the best surface condition is referred to as "class A". While no general criteria has been defined for this "class A", the "class A" surface typically has the short wave (SW) corresponding to the amount of the surface irregularity at smaller pitch of up to 20 and the long wave corresponding to the amount of the surface irregularity at larger pitch of up to 8. The surface of the fiber-reinforced resin molded article having the film formed thereon was evaluated five times for its LW value by using a wave scanning apparatus (Wave-Scan Dual). The average calculated is shown in Table 1.

<Weatherability>

The weatherability was evaluated by placing the molded article having the film formed thereon in the xenon weathermeter (SX75 manufactured by Suga Test Instruments Co., Ltd.) and observing the change for the period of 50 days. The test was conducted according to SAE J2527. Those wherein no generation of the coloring or cracks were noted after the leaving were evaluated "A", those with slight coloring or cracks were evaluated "B", and those with significant coloring or cracks were evaluated "C".

The resin compositions for the film were prepared by mixing the ingredients according to the blend ratio shown in Table 1 by the procedure as described above and the viscosity measurement and the measurement of the dielectric properties were conducted as described above. In addition, the cured resin plates were prepared by using this resin composition for the film by the procedure as described above to conduct the evaluation of the coloring. Furthermore, the film was formed on the fiber-reinforced composite material by using the resin composition for the film to thereby evaluate the surface smoothness and weatherability.

(Example 1)

As shown in Table 1, a main solution containing 50 parts by weight of an aliphatic epoxy resin "RIKARESIN" (registered trademark) HBE-100 and 50 parts by weight of an aliphatic epoxy resin "RIKARESIN" (registered trademark) DME-100 and a curing agent solution containing 104 parts by weight of a thiol compound "Karenz MT" (registered trademark) NR1 having 3 parts by weight of a quaternary phosphonium salt "HISHICOLIN" (registered trademark) PX-4ET compatibilized therewith were mixed to prepare the epoxy resin composition. This epoxy resin composition for the film exhibited reduced viscosity increase when maintained at a temperature of 50°C, and this state of low viscosity was maintained. In addition, since the mold releasable time represented by t90 at a temperature of 50°C was short, use of this composition was proved to be effective in reducing the molding time in the molding of the fiber-reinforced composite material having the cured film. Furthermore, no coloring was noted for the cured product of this epoxy resin composition for the film. The fiber-reinforced composite material having the cured film prepared by using this epoxy resin composition for the film exhibited good surface smoothness, and also, good weatherability with no discoloration in the evaluation of the weatherability. The results are shown in Table 1.

(Example 2)

The procedure of Example 1 was repeated except that 83 parts of thiol compound "Karenz MT" (registered trademark) NR1 was used. The composition exhibited good viscosity stability at 50°C as well as short mold releasable time. No coloring was noted for the cured product of this epoxy resin composition. The fiber-reinforced composite material having the cured film prepared by using this epoxy resin composition for the film exhibited good surface smoothness, and also, good weatherability with no discoloration in the evaluation of the weatherability. The results are shown in Table 1.

(Examples 3 and 4)

The procedure of Example 1 was repeated except that a main solution containing 100 parts by weight of an aliphatic epoxy resin "RIKARESIN" (registered trademark) HBE-100 was used and amount of the thiol compound "Karenz MT" (registered trademark) PE1 used was 63 parts by weight in Example 3 and 81 parts by weight in Example 4. Both compositions exhibited good viscosity stability at 50°C as well as short mold releasable time. No coloring was noted for the cured product of this epoxy resin composition. The fiber-reinforced composite material having the cured film prepared by using these epoxy resin compositions for the film exhibited good surface smoothness, and also, good weatherability with no discoloration in the evaluation of the weatherability. The results are shown in Table 1.

(Reference Example 5)

The procedure of Example 1 was repeated except that a main solution containing 100 parts by weight of an aliphatic epoxy resin "RIKARESIN" (registered trademark) DME-100 was used and the curing agent solution used contained 77 parts by weight of thiol compound "PEMP" and 2.5 parts by weight of ethyltriphenylphosphonium bromide. The composition exhibited good viscosity stability at 50°C as well as short mold releasable time. No coloring was noted for the cured product of this epoxy resin composition. The fiber-reinforced composite material having the cured film prepared by using this epoxy resin composition for the film exhibited good surface smoothness, and also, good weatherability with no discoloration in the evaluation of the weatherability. The results are shown in Table 1.

(Examples 6 and 7)

The procedure of Example 1 was repeated except that a main solution containing 90 parts by weight of an aliphatic epoxy resin "RIKARESIN" (registered trademark) HBE-100 and 10 parts by weight of an aliphatic epoxy resin "RIKARESIN" (registered trademark) DME-100 was used and the curing agent solution used contained 71 parts by weight of thiol compound "Karenz MT" (registered trademark) PE1 and 0.1 part by weight (Example 6) or 10 parts by weight (Example 7) of quaternary phosphonium salt "HISHICOLIN" (registered trademark) PX-4ET. Both compositions exhibited good viscosity stability at 50°C as well as short mold releasable time. No coloring was noted for the cured product of this epoxy resin composition. The fiber-reinforced composite material having the cured film prepared by using these epoxy resin compositions for the film exhibited good surface smoothness, and also, good weatherability with no discoloration in the evaluation of the weatherability. The results are shown in Table 1.

(Comparative Example 1)

The procedure of Example 1 was repeated except that the main solution used contained 100 parts by weight of bisphenol A epoxy resin "Epotote" (registered trademark) YD-128, and amount of the thiol compound "Karenz MT" (registered trademark) NR1 in the curing agent solution was 100 parts by weight. Since the epoxy resin composition for the film was free from the component [A], the fiber-reinforced composite material having the cured film prepared by using this epoxy resin composition for the film exhibited poorer weatherability compared to the Examples. The results are shown in Table 1.

(Comparative Example 2)

The procedure of Example 1 was repeated except that a main solution containing 100 parts by weight of an aliphatic epoxy resin "RIKARESIN" (registered trademark) HBE-100 was used and a curing agent solution containing 32 parts by weight of m-xylylenediamine were used. This epoxy resin composition for the film free from the components [B] and [C] failed to cure at sufficiently high speed at 50°C and higher temperature was required for the curing, and the cured product exhibited coloring. In the case of this fiber-reinforced composite material having the cured film prepared by using this epoxy resin composition for the film, the cured film had to be molded at a higher temperature, and the resulting surface smoothness was inferior. The results are shown in Table 1.

The amine curing agent used was "m-xylylenediamine", which generally has the trend of "rapid curing in the early stage but retarded curing in the final stage of the curing". In this Example, it is conceived that the temperature increase was necessary for the faster curing, and this curing at the higher temperature resulted in the poor surface smoothness. In addition, the aromatic ring included in the m-xylylenediamine is likely to promote coloring of the cured product.

(Comparative Example 3)

The procedure of Example 1 was repeated except that a main solution containing 100 parts by weight of an aliphatic epoxy resin "RIKARESIN" (registered trademark) DME-100 and a curing agent solution containing 106 parts by weight of an acid anhydride "HN-5500" and 5 parts by weight of tri-p-tolylphosphine were used. This epoxy resin composition for the film free from the components [B] and [C] failed to cure at sufficiently high speed at 50°C and a higher temperature was required for the curing. In the case of this fiber-reinforced composite material having the cured film prepared by using this epoxy resin composition for the film, the cured film had to be molded at a higher temperature, and the resulting surface smoothness was inferior. The results are shown in Table 1.

Due to the use of the "HN-5500 (methylhexahydrophthalic acid anhydride)" for the acid anhydride and "tri-p-tolylphosphine" for the accelerator, and due to the general tendency that, in the curing of the acid anhydride, "reaction is likely to be sensitive to the temperature", temperature had to be increased in this Example for fast curing, and this

curing at a higher temperature conceivably resulted in the poor surface smoothness. In the meanwhile, use of this acid anhydride which does not include any aromatic ring is less likely to result in the coloring of the cured product.

(Comparative Example 4)

The procedure of Example 1 was repeated except that the main solution containing 100 parts by weight of an aliphatic epoxy resin "RIKARESIN" (registered trademark) HBE-100 was used and the curing agent solution used was 57 parts by weight of thiol compound "PEMP". This epoxy resin composition for the film which was free from the component [C] failed to cure both at 50°C and at a higher temperature. The results are shown in Table 1.

(Comparative Example 5)

The procedure of Example 1 was repeated except that the main solution containing 100 parts by weight of an aliphatic epoxy resin "RIKARESIN" (registered trademark) HBE-100 was used and the curing agent solution used was 2.5 parts by weight of ethyltriphenylphosphonium bromide. This epoxy resin composition for the film which was free from the component [B] failed to cure both at 50°C and at a higher temperature. The results are shown in Table 1.

As described above, the resin composition for the film of the present invention is well adapted for molding the film of the fiber-reinforced composite material, and it enables production of a molded article having good appearance and good surface quality at a high productivity.

[Table1]

| | | | Examples 1 | Examples 2 | Examples 3 | Examples 4 | Examples 5** | Examples 6 | Examples 7 | Comparative Examples 1 | Comparative Examples 2 | Comparative Examples 3 | Comparative Examples 4 | Comparative Examples 5 |
|---|---|---|---|---|---|---|---|---|---|---|---|---|---|---|
| Resin composition for the film | Component [A] Aliphatic epoxy resin | RIKARESIN HBE-100 | 50 | 50 | 100 | 100 | - | 90 | 90 | - | 100 | - | 100 | 100 |
| | | RIKARESIN DME-100 | 50 | 50 | - | - | 100 | 10 | 10 | - | - | 100 | - | - |
| | Epoxy resin not contained in Component [A] | YD-128 | - | - | - | - | - | - | - | 100 | - | - | - | - |
| | Component [B] Thiol compound | PEMP | - | - | - | - | 77 | - | - | - | - | - | 57 | - |
| | | Karenz MT NR1 | 104 | 83 | - | - | - | - | - | 100 | - | - | - | - |
| | | Karenz MT PE1 | - | - | 63 | 81 | - | 71 | 71 | - | - | - | - | - |
| | Component [C] Quaternary phosphonium salt | Ethyltriphenylphosphonium bromide | - | - | - | - | 2.5 | - | - | - | - | - | - | 3 |
| | | HISHICOLIN PX-4ET | 3 | 3 | 3 | 3 | - | 0.1 | 10 | 3 | - | - | - | - |
| | Other substances | m-xylylene-diamine | - | - | - | - | - | - | - | - | 32 | - | - | - |
| | | HN-5500 | - | - | - | - | - | - | - | - | - | 106 | - | - |
| | | tri-p-tolylphosphine | - | - | - | - | - | - | - | - | - | 5 | - | - |
| | H/E ratio | | 1.0 | 0.8 | 1.0 | 1.3 | 1.0 | 1.1 | 1.1 | 1.0 | 1.0 | 1.0 | 1.0 | - |
| Properties of the uncured resin | Viscosity of the composition at 1 min. after mixing at 50°C [mPa·s] | | 330 | 297 | 276 | 272 | 45 | 231 | 824 | 957 | 290 | 272 | 42 | 205 |
| | t90 at 50°C [minute] | | 19 | 25 | 16 | 17 | 8 | 30 | 2 | 21 | 10 (*1) | 20 (*1) | Not cured | Not cured |
| Properties of the cured resin | Coloring of the cured product | | No coloring | No coloring | No coloring | No coloring | No coloring | No coloring | No coloring | No coloring | No coloring | No coloring | - | - |
| Properties of the film | Surface smoothness (WS) | SW | 17.1 | 18.1 | 13.5 | 14.9 | 14.9 | 15.3 | 16.8 | 14.1 | 20.1 | 23.2 | - | - |
| | | LW | 5.9 | 6.3 | 4.1 | 5.7 | 4.3 | 4.2 | 7.5 | 4.2 | 8.9 | 12.7 | - | - |
| | Weatherability | | A | A | A | A | A | A | A | C | B | B | - | - |

*1: time at 100°C, **Reference Example

Industrial Applicability

The resin composition for the film of the present invention exhibits excellent stability in the viscosity of the epoxy resin composition at low temperature (for example, 50°C) after its preparation by mixing and cures in short time in the molding thereby enabling production of a high quality fiber-reinforced composite material. Accordingly, an increased use of the fiber-reinforced composite material in the automobile application is expected, resulting in the improvement of fuel efficiency by reduced automobile weight and contribution for reduction of the greenhouse gas emission.

## Claims

1. A molded article comprising a fiber-reinforced composite material and a film of a resin composition on a surface of the fiber-reinforced composite material prepared by curing the resin composition, wherein the resin composition comprises components [A] to [C]:

    component [A]: an aliphatic epoxy resin,
    component [B]: a thiol compound, and
    component [C]: a quaternary phosphonium salt,

    wherein the component [B] has at least 2 thiol structures represented by chemical formula 2:

    [Chemical formula 2]

    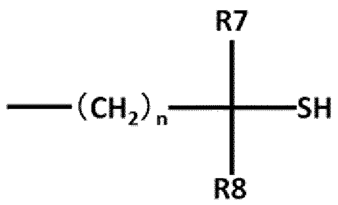

    ... Chemical formula 2

    wherein

    R7 represents hydrogen atom or an alkyl group, a cycloalkyl group, an aralkyl group, or an aryl group, containing 1 to 20 carbon atoms,
    R8 represents an alkyl group, a cycloalkyl group, an aralkyl group, or an aryl group, containing 1 to 20 carbon atoms, and
    n represents a natural number of at least 1.

2. A molded article according to claim 1 wherein the resin composition contains at least 0.1 part by weight and less than 15 parts by weight of the component [C] in relation to 100 parts by weight of the component [A].

3. A molded article according to claim 1 or 2 wherein the component [C] is a compound represented by chemical formula 1:

    [Chemical formula 1]

    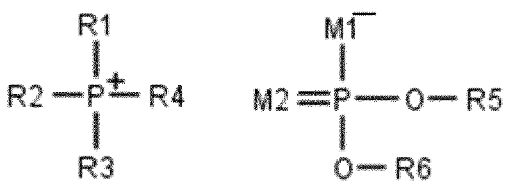

    ... Chemical formula 1

    wherein

R1 to R4 independently represent an alkyl group, a cycloalkyl group, an aralkyl group, or an aryl group, containing 1 to 20 carbon atoms,
R5 and R6 independently represent an alkyl group containing 1 to 20 carbon atoms, and
M1 and M2 independently represent an element selected from Group XVI in the periodic table.

**4.** A molded article according to any one of claims 1 to 3 wherein the component [A] has an alicyclic structure.

**5.** A molded article according to claim 4 wherein the component [A] has a cyclohexane ring.

**6.** A molded article according to any one of claims 1 to 5 wherein the component [A] is a hydrogenated bisphenol epoxy resin.

**7.** A molded article according to any one of claims 1 to 6 wherein

the fiber-reinforced composite material contains two or more reinforcement fiber layers, and
the reinforcement fiber layer of the reinforcement fiber layers in contact with the film is in the form selected from plain-weave reinforcement fiber fabric, twill reinforcement fiber fabric, satin reinforcement fiber fabric, and unidirectional reinforcement fiber fabric.

**8.** A molded article according to any one of claims 1 to 7 wherein the fiber-reinforced composite material contains carbon fiber as the reinforcement fiber.

**9.** A method for producing a molded article according to any one of claims 1 to 8 comprising the steps of

forming the fiber-reinforced composite material at a molding temperature of at least 80°C and up to 300°C, and
forming the film by curing the resin composition containing the components [A] to [C] at a temperature of at least 30°C and less than 80°C on a surface of the fiber-reinforced composite material.

## Patentansprüche

**1.** Formteil, das ein faserverstärktes Verbundmaterial und einen Film aus einer Harzzusammensetzung auf einer Oberfläche des faserverstärkten Verbundmaterials, der durch Härten der Harzzusammensetzung hergestellt wurde, umfasst, wobei die Harzzusammensetzung die Komponenten [A] bis [C] umfasst:

Komponente [A]: ein aliphatisches Epoxidharz,
Komponente [B]: eine Thiolverbindung und
Komponente [C]: ein quaternäres Phosphoniumsalz,

wobei die Komponente [B] zumindest 2 Thiolstrukturen der chemischen Formel 2 aufweist:

[chemische Formel 2]

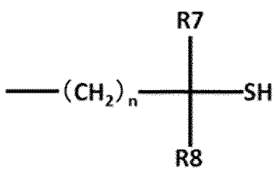

… chemische Formel 2

worin

R7 für ein Wasserstoffatom oder eine Alkylgruppe, eine Cycloalkylgruppe, eine Aralkylgruppe oder eine Arylgruppe steht, die 1 bis 20 Kohlenstoffatome enthält,
R8 für eine Alkylgruppe, eine Cycloalkylgruppe, eine Aralkylgruppe oder eine Arylgruppe steht, die 1 bis 20 Kohlenstoffatome enthält, und
n für eine natürliche Zahl von zumindest 1 steht.

**2.** Formteil nach Anspruch 1, wobei die Harzzusammensetzung zumindest 0,1 Gewichtsteile und weniger als 15 Gewichtsteile der Komponente [C], bezogen auf 100 Gewichtsteile der Komponente [A], enthält.

**3.** Formteil nach Anspruch 1 oder 2, wobei die Komponente [C] eine Verbindung der chemischen Formel 1 ist:

[chemische Formel 1]

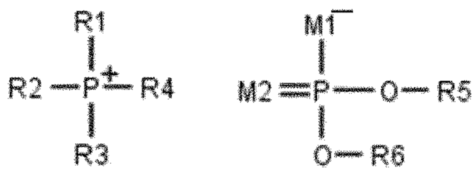

… chemische Formel 1

worin

R1 bis R4 jeweils unabhängig voneinander für eine Alkylgruppe, eine Cycloalkylgruppe, eine Aralkylgruppe oder eine Arylgruppe stehen, die 1 bis 20 Kohlenstoffatome enthält,
R5 und R6 jeweils unabhängig voneinander für eine Alkylgruppe stehen, die 1 bis 20 Kohlenstoffatome enthält,
M1 und M2 jeweils unabhängig voneinander für ein Element stehen, das aus der Gruppe XVI des Periodensystems ausgewählt ist.

**4.** Formteil nach einem der Ansprüche 1 bis 3, wobei die Komponente [A] eine alizyklische Struktur aufweist.

**5.** Formteil nach Anspruch 4, wobei die Komponente [A] einen Cyclohexanring aufweist.

**6.** Formteil nach einem der Ansprüche 1 bis 5, wobei die Komponente [A] ein hydriertes Bisphenol-Epoxid-Harz ist.

**7.** Formteil nach einem der Ansprüche 1 bis 6, wobei

das faserverstärkte Verbundmaterial zwei oder mehr Verstärkungsfaserschichten enthält und
die Verstärkungsfaserschicht der Verstärkungsfaserschichten, die mit dem Film in Kontakt steht, in einer aus einem Verstärkungsfaserstoff mit Leinwandbindung, einem Verstärkungsfaserstoff mit Körperbindung, einem Verstärkungsfaserstoff mit Atlasbindung und einem unidirektionalen Verstärkungsfaserstoff ausgewählten Form vorliegt.

**8.** Formteil nach einem der Ansprüche 1 bis 7, wobei das faserverstärkte Verbundmaterial Kohlefasern als Verstärkungsfasern enthält.

**9.** Verfahren zur Herstellung eines Formteils nach einem der Ansprüche 1 bis 8, das die folgenden Schritte umfasst:

das Bilden des faserverstärkten Verbundmaterials bei einer Formtemperatur von zumindest 80 °C und bis zu 300 °C und
das Ausbilden des Films durch Härten der Harzzusammensetzung, welche die Komponenten [A] bis [C] enthält, bei einer Temperatur von zumindest 30 °C und weniger als 80 °C auf einer Oberfläche des faserverstärkten Verbundmaterials.

## Revendications

**1.** Article moulé comprenant un matériau composite renforcé de fibres et un film d’une composition de résine sur une surface du matériau composite renforcé de fibres préparé par durcissement de la composition de résine, dans lequel la composition de résine comprend des composants [A] à [C] :

composant [A] : une résine époxy aliphatique,
composant [B] : un composé thiol, et
composant [C] : un sel de phosphonium quaternaire,

dans lequel le composant [B] possède au moins 2 structures thiol représentées par la formule chimique 2 :

[Formule chimique 2]

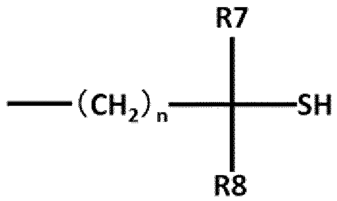

... Formule chimique 2

où
R7 représente un atome d'hydrogène ou un groupe alkyle, un groupe cycloalkyle, un groupe aralkyle, ou un groupe aryle, contenant 1 à 20 atomes de carbone,
R8 représente un groupe alkyle, un groupe cycloalkyle, un groupe aralkyle, ou un groupe aryle, contenant 1 à 20 atomes de carbone, et
n représente un entier naturel égal à au moins 1.

**2.** Article moulé selon la revendication 1 dans lequel la composition de résine contient au moins 0,1 partie en poids et moins de 15 parties en poids du composant [C] par rapport à 100 parties en poids du composant [A].

**3.** Article moulé selon la revendication 1 ou 2 dans lequel le composant [C] est un composé représenté par la formule chimique 1 :

[Formule chimique 1]

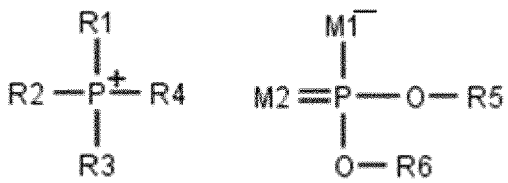

... Formule chimique 1

où

R1 à R4 représentent indépendamment un groupe alkyle, un groupe cycloalkyle, un groupe aralkyle, ou un groupe aryle, contenant 1 à 20 atomes de carbone,
R5 et R6 représentent indépendamment un groupe alkyle contenant 1 à 20 atomes de carbone, et
MI et M2 représentent indépendamment un élément choisi dans le Groupe XVI du tableau périodique.

**4.** Article moulé selon l'une quelconque des revendications 1 à 3 dans lequel le composant [A] présente une structure alicyclique.

**5.** Article moulé selon la revendication 4 dans lequel le composant [A] présente un cycle cyclohexane.

**6.** Article moulé selon l'une quelconque des revendications 1 à 5 dans lequel le composant [A] est une résine époxy de bisphénol hydrogénée.

**7.** Article moulé selon l'une quelconque des revendications 1 à 6 dans lequel

le matériau composite renforcé de fibres contient deux couches de fibres de renforcement ou plus, et
la couche de fibres de renforcement des couches de fibres de renforcement en contact avec le film est sous la forme choisie parmi un tissu de fibres de renforcement à armure toile, un tissu de fibres de renforcement sergé, un tissu de fibres de renforcement satin, et un tissu de fibres de renforcement unidirectionnel.

8. Article moulé selon l'une quelconque des revendications 1 à 7 dans lequel le matériau composite renforcé de fibres contient de la fibre de carbone comme fibre de renforcement.

9. Procédé de production d'un article moulé selon l'une quelconque des revendications 1 à 8 comprenant les étapes consistant à

former le matériau composite renforcé de fibres à une température de moulage d'au moins 80°C et jusqu'à 300°C, et
former le film par durcissement de la composition de résine contenant les composants [A] à [C] à une température d'au moins 30°C et inférieure à 80°C sur une surface du matériau composite renforcé de fibres.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2013209510 A
- JP 2008088212 A
- JP 2009013263 A
- WO 2010137636 A
- JP 2015221900 A
- JP 2013221091 A
- WO 2015107903 A